# EUROPEAN PATENT APPLICATION

(11) **EP 2 983 176 A1**
(43) Date of publication of application: **10.02.2016**
(21) Application number: 14306240.4
(22) Date of filing: 05.08.2014
(51) Int. Cl.: H01B 13/14, H01B 13/30

(54) **Method for preparing a crosslinked cable**

(71) Applicant: Nexans, 75008 Paris (FR)
(72) Inventor: Larsson, Bjorn, 1788 Berg (NO); Andersen, Jan Roger, 1675 Krakeroy (NO); Hovland, Helge, 1515 Moss (NO)
(74) Representative: Gauer, Pierre

(57) **Abstract**

The invention relates to a method for preparing a crosslinked cable (2), comprising the steps of:
- providing a cable (2) comprising a crosslinked polymer composition,
- reducing or eliminating the content of rest(s) or byproduct(s) from the crosslinking, this step being referred to as a degassing step,

characterized in that the degassing step is done by supplying heated air through openings in the bottom (16) of a degassing device (4) in which the cable (2) is arranged.

## Description

The present invention relates generally to electrical power equipment, and particularly to high voltage electrical power equipment. More particularly, the invention relates to a method for preparing a crosslinked cable, typically a cross linked polyethylene (XLPE) insulation based cable, in which the degassing step is improved. The invention also relates to a device for carrying out said method.

It is known to use free radical generating agents to modify a product, such as a polymer composition via a radical reaction. Free radical agents are used, for example, to initiate (a) crosslinking in a polymer, that is to say mainly the formation of crosslinks (bridges) inter-polymers by radical reaction (b) in the grafting a polymer, that is to say the introduction of compounds to a polymer chain (in the backbone chains and/or side) by radical reaction, and (c) visbreaking in a polymer, that is to means the change of the melt index (MFR) of a polymer by radical reaction. These changes are known in the polymer art.

When added to a polymer composition, the free radical generating agents act by generation of radicals, typically by radical decomposition, under conditions which allow the formation of radical. The decomposed radicals initiate further radical reactions within a polymer composition. The resulting decomposition products of the free radical generator agent are typically a result of several reactions of the decomposition products of the reaction of initial radical formation. The products resulting from decomposition typically remain in the modified polymer and may include unwanted harmful decomposition products. Peroxides are generating agents very common free radical used, for example, in the polymer industry for such modifications of polymer. The resulting decomposition products of peroxides may include volatile by-products. For example, dicumylperoxide, which is commonly used peroxide in polymer field, decomposes to methane, acetophenone and cumyl alcohol during the radical formation step, for example during a crosslinking step. Formed methane gas (CH₄) is flammable, explosive and volatile and is therefore a risk in a work environment.

Applications in electrical wire and cable, a typical cable comprises at least one conductor surrounded by one or more layers of polymeric materials. In some power cables, including medium voltage power cables (MV), high voltage (HV) and extra high (EHV), said conductor is surrounded by several layers including an inner semiconductive layer, an insulation layer and a outer semiconductor, in this order. The cables are commonly produced by extrusion layers of a conductor. One or more of said layers are then typically crosslinked to improve the resistance to deformation at elevated temperatures, as well as mechanical strength and/or chemical resistance, of the layer(s) of the cable. The free radical generating agent, such as an organic peroxide, is typically incorporated to the layer material prior to extruding/layer(s) on a conductor. After formation of the layered cable, the cable is then subjected to a crosslinking step to initiate the radical formation and thereby crosslinking reaction.

Decomposition products of free radical forming agent are mainly caught in the cable layer after curing. This causes problems in terms of the manufacturing process as well as cable in terms of the quality of the final cable.

Accordingly, after curing the cable must be cooled carefully to avoid gaseous volatile decomposition products such as methane forming voids in the polymer layer. These voids have typically an average diameter between 10 and 100 microns. Partial discharges may occur in such voids within a cable that is exposed to an electric field, thereby reducing the dielectric strength of the cable.

MV, HV and EHV power cables must have a high quality in terms of safety layer during installation and end-use of it. In service, volatile decomposition products in a cable resulting from a crosslinking step can create a gas pressure and thus cause defects in the shielding and in the joints. For example, when a cable is equipped with a metal barrier, then the gaseous products can exert a pressure, especially on the joints and terminations, whereby a system failure may occur.

For the reasons above, the volatile decomposition products, such as methane when dicumyl peroxide is used conventionally are minimized or eliminated after the crosslinking step and cooling. This removal step is usually known as a degassing step.

The cable, typically wound on cable drums, is normally degassed at elevated temperature in the range from 50°C to 80°C. The cable is typically electrically heated with an AC current. Such a method suffers the shortcoming that a low degassing degree of the byproducts is achieved in the cable. However, it is well known that the major parts of methane and other byproducts have to be removed before the next steps of the process.

It is an object of the present invention to provide an efficient method for preparing a crosslinked cable, which brings the byproducts to an acceptable content.

The object mentioned above is accomplished by a method for preparing a crosslinked cable.

The method according to the invention comprises the steps of:
- providing a cable comprising a crosslinked polymer composition,
- reducing or eliminating the content of rest(s) or byproduct(s) from the crosslinking, this step being referred to as a degassing step.

According to the method of the invention, the degassing step is done by supplying heated air through openings in the bottom of a degassing device in which the cable is arranged.

Thus, this method involves only air heating, there is no risk of overheating and the method provides stable temperatures and thus a shorter and more efficient degassing.

The crosslinked polymer composition advantageously belongs to an insulation system of the cable.

The crosslinked polymer composition is typically a cross-linked polyethylene.

The temperature of the heated air can be comprised between 50 and 80 °C.

The heated air can be supplied into a chamber that is placed underneath a degassing basket.

The bottom of the degassing basket can include openings.

The degassing basket can be divided into several sections, each section comprising at least one opening for the air supplying.

The degassing basket can comprise a distribution plate that is placed over the bottom of the degassing basket.

Every opening is preferably associated with a blower in order to force the heated air through the opening.

The degassing device can include several cables and vertical spacers between the cables.

The invention is also related to a device for carrying out said method.

The device according to the invention comprises a degassing device in which cables comprising a crosslinked polymer composition are arranged, and means for supplying heated air through openings in the bottom of the degassing device.

The cables are typically wound on a drum.

Further characteristics of the invention and advantages thereof will be evident from the following detailed description of embodiments of the invention:
- FIG. 1 illustrates schematically in a perspective view a cable,
- FIG. 2 is a partial vertical cross-sectional view of a degassing device according to the invention, and
- FIG. 3 is a partial top sectional view of the degassing device according to the invention.

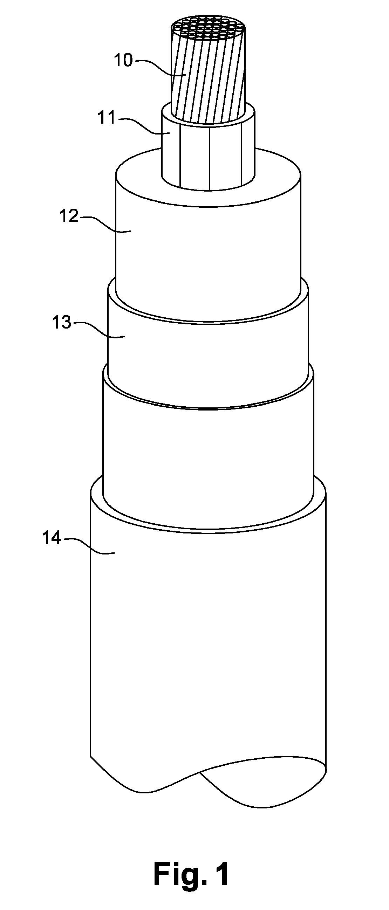

A method for production of an insulated electric high voltage cable according to an embodiment of the present invention will now be described with reference to FIG. 1. The cable can be a high voltage cable, a medium voltage cable or an extra-high voltage cable. The AC or DC cable comprises from the center and outwards: a stranded multi-wire conductor 10, a first extruded semi-conducting shield 11 disposed around and outside the conductor 10, an extruded polyethylene based conductor insulation 12 with an extruded, cross-linked composition as further described below, a second extruded semi-conducting shield 13 disposed outside the conductor insulation 12, and an outer covering or sheath 14 arranged outside the polymer based insulation system.

The cable can when found appropriate be further complemented in various ways with various functional layers or other features. It can for example be complemented with a reinforcement in form of metallic wires outside the outer extruded shield 13, a sealing compound or a water swelling powder introduced in metal/polymer interfaces or a system achieved by e.g. a corrosion resistant metal polyethylene laminate and longitudinal water sealing achieved by water swelling material, e.g. tape or powder beneath the sheath 14. The conductor need not be stranded but can be of any desired shape and constitution, such as a stranded multi-wire conductor, a solid conductor or a segmental conductor.

According to the method for production of the cable, a polymer based insulation system is extruded around the conductor 10, wherein the polymer based insulation system comprises the semi-conducting shield 11, the polyethylene based conductor insulation 12, and the second semi-conducting shield 13. In an alternative embodiment the polyethylene based conductor insulation 12 is exchanged for other polymer based conductor insulation.

Below is a short description of one exemplary method of performing the extrusion. A person skilled in the art realizes that there are other extrusion techniques that can be used with the present invention.

In the exemplary method the conductor is fed from a conductor pay-off through the extruder equipment and other processing and conditioning devices and is finally taken up on a cable core take-up. The conductor pay-off and cable core take-up may be reels or drums suitable for discrete lengths but can be of any suitable type including devices for essentially continuous handling of the supplied conductor and produced cable. The conductor is passed over a first wheel through a conductor preheater wherein it is preheated for a suitable temperature before the insulation system is applied by extrusion. The process is suitable for true triple extrusion where a triple head extruder is used. The inner and outer semi-conductive layers are applied using two separate extruders and a further third extruder is used for the main insulation.

After the extrusion operation the extruded polyethylene based conductor insulation 12 is advantageously, cross-linked. To this end the insulated cable is passed through a pressurized curing and cooling chamber, wherein the conditions is controlled to ensure the desired cross-linking degree and other structural characteristics that can be effected by this controlled conditioning and cooling of the extruded insulation system. Typically, the extruded polyethylene based conductor insulation 12 includes a number of additives, among them dicumylperoxide and additives. Thereafter the cable is hauled through a haul-off caterpillar and over a second wheel before being taken up for further processing.

The above approach offers the possibility of an essentially continuous or semi-continuous process for the application and processing of the extruded insulation system.

As a result of the process, however, methane may be created in the cross-linked polyethylene based conductor insulation 12. Any methane may be removed by exposing, in a degassing step, the extruded cable to a heat treatment.

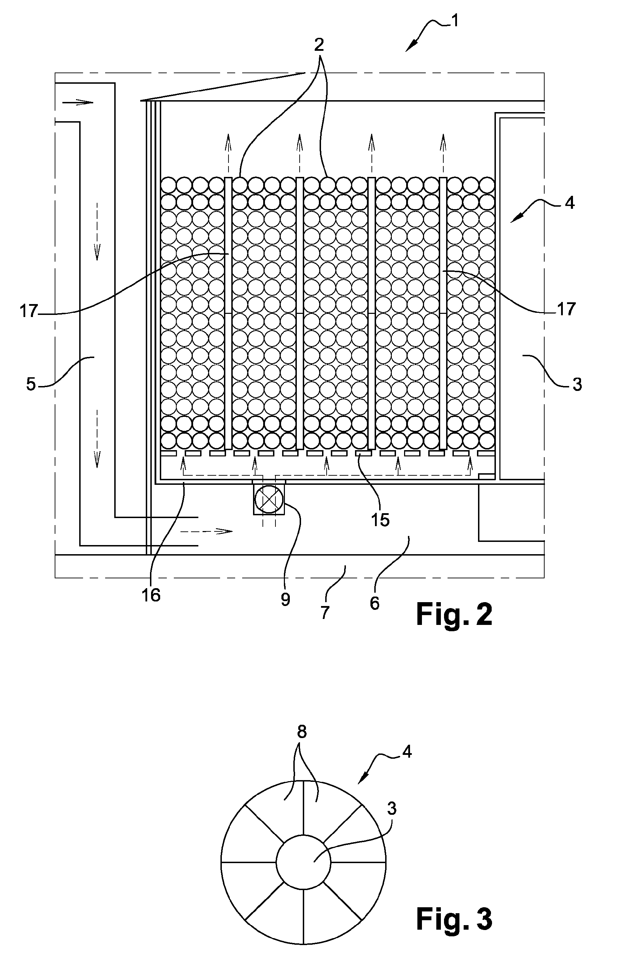

With reference to FIG. 2, a device 1 according to the invention for carrying out the degassing step comprises cables 2 that are wound on a central cable drum 3 in a degassing basket 4. The device 1 includes an air duct 5 for an air admission that is located in a space 6 underneath the basket 4 (i.e. between the floor 7 and the basket 4). The temperature of the hot air in the air duct 5 is typically comprised between 50 and 80°C, and most preferably between 65 and 75°C.

As illustrated in FIG. 3, the degassing basket 4 is divided into several chamber/sections 8. Each section 8 includes an opening through which the heated air is forced with for instance a blower 9. The blowers 9 create an overpressure to distribute the air properly through all the cable layers.

An even distribution of air is obtained by a) a distribution plate 15 over the bottom 16 in which the openings are placed and b) vertical spacers 17 between the cables 2. The distribution plate 15 also comprises openings for the air passing.

Thus, the device 1 according to the invention gives a stable temperature, a uniform temperature distribution and an efficient degassing of all the cable layers.

## Claims

1. Method for preparing a crosslinked cable (2), comprising the steps of:
- providing a cable (2) comprising a crosslinked polymer composition,
- reducing or eliminating the content of rest(s) or byproduct(s) from the crosslinking, this step being referred to as a degassing step,
- **characterized in that** the degassing step is done by supplying heated air through openings in the bottom (16) of a degassing device (4) in which the cable (2) is arranged.

2. Method according to claim 1, **characterized in that** the crosslinked polymer composition belongs to an insulation system of the cable (2).

3. Method according to claim 1 or 2, **characterized in that** the crosslinked polymer composition is a cross-linked polyethylene.

4. Method according to any of claims 1 to 3, **characterized in that** the temperature of the heated air is comprised between 50 and 80°C.

5. Method according to any of claims 1 to 4, **characterized in that** the heated air is supplied into a chamber (6) that is placed underneath a degassing basket (4).

6. Method according to claim 5, **characterized in that** the bottom (16) of the degassing basket (4) includes openings.

7. Method according to claim 6, **characterized in that** the degassing basket (4) is divided into several sections (8), each section comprising at least one opening for the air supplying.

8. Method according to any of claims 5 to 7, **characterized in that** the degassing basket (4) comprises a distribution plate (15) that is placed over the bottom (16) of the degassing basket (4).

9. Method according to any of claims 1 to 8, **characterized in that** every opening is associated with a blower (9) in order to force the heated air through the opening.

10. Method according to any of claims 1 to 9, **characterized in that** the degassing device (4) includes several cables (2) and vertical spacers (17) between the cables (2).

11. Device (1) for carrying out the method according to any of claims 1 to 10, **characterized in that** it comprises a degassing device (4) in which cables (2) comprising a crosslinked polymer composition are arranged, and means (5) for supplying heated air through openings in the bottom (16) of the degassing device (4).

12. Device (1) according to claim 11, **characterized in that** the cables (2) are wound on a drum (3).
